(19) Europäisches Patentamt
European Patent Office
Office européen des brevets

(11) EP 3 450 393 A1

(12) EUROPEAN PATENT APPLICATION
published in accordance with Art. 153(4) EPC

(43) Date of publication:
**06.03.2019 Bulletin 2019/10**

(21) Application number: **17789457.3**

(22) Date of filing: **24.04.2017**

(51) Int Cl.:
***C01B 32/158*** *(2017.01)* ***C08K 3/04*** *(2006.01)*
***C08K 5/3415*** *(2006.01)* ***C08L 1/00*** *(2006.01)*
***C09D 5/24*** *(2006.01)* ***C09D 7/12*** *(2006.01)*
***H01B 1/24*** *(2006.01)* ***H01B 5/14*** *(2006.01)*

(86) International application number:
**PCT/JP2017/016160**

(87) International publication number:
**WO 2017/188175 (02.11.2017 Gazette 2017/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.04.2016 JP 2016088731**
**31.08.2016 JP 2016169144**
**30.11.2016 JP 2016232446**

(71) Applicant: **Toray Industries, Inc.**
**Tokyo 103-8666 (JP)**

(72) Inventors:
- **OKAMOTO, Naoyo**
**Nagoya-shi**
**Aichi 455-8502 (JP)**
- **IMAZU, Naoki**
**Nagoya-shi**
**Aichi 455-8502 (JP)**
- **HIRAI, Takayoshi**
**Nagoya-shi**
**Aichi 455-8502 (JP)**
- **NISHINO, Hidekazu**
**Nagoya-shi**
**Aichi 455-8502 (JP)**

(74) Representative: **Mewburn Ellis LLP**
**City Tower**
**40 Basinghall Street**
**London EC2V 5DE (GB)**

# (54) CARBON NANOTUBE DISPERSION, METHOD FOR PRODUCING SAME, AND CONDUCTIVE MOLDED BODY

(57) Disclosed is a carbon nanotube dispersion liquid comprising a carbon nanotube-containing composition, a cellulose derivative having a specific structure, and an organic solvent, wherein the organic solvent contains one or more solvents selected from aprotic polar solvents or terpenes, the concentration of the carbon nanotube-containing composition contained in the carbon nanotube dispersion is 1% by mass or less, and when the dispersion liquid is subjected to a centrifugal treatment at 10,000 G for 10 minutes to recover 90% by volume of the supernatant, the concentration of the carbon nanotube dispersion liquid of the supernatant portion accounts for 80% or more of the concentration of the carbon nanotube dispersion liquid before the centrifugal treatment. To provide a carbon nanotube dispersion liquid which exhibits high electrical conductivity on a base when exhibiting excellent dispersibility in an organic solvent, and a method for manufacturing the same.

EP 3 450 393 A1

## Description

### Technical Field

The present invention relates to a carbon nanotube dispersion liquid, a method for manufacturing the same and an electrically conductive molded body.

### Background Art

Carbon nanotubes are materials considered promising for a range of industrial applications because of various characteristics attributable to their ideal one-dimensional structure, such as good electrical conductivity, thermal conductivity and mechanical strength. Hopes are that controlling the geometry of carbon nanotubes in terms of diameter, number of walls and length will lead to performance improves and an expanded applicability. Generally speaking, carbon nanotubes with fewer walls have higher graphite structures. Since single-walled carbon nanotubes and double-walled carbon nanotubes have high graphite structures, their electrical conductivity, thermal conductivity and other characteristics are also known to be high. Of all multi-walled carbon nanotubes, those with a relatively few two to five walls exhibit characteristics of both a single-walled carbon nanotube and a multi-walled carbon nanotube, so that they are in the spotlight as promising materials for use in various applications.

Examples of an application that takes advantage of the carbon nanotube of an electrical conductivity include cleanroom parts, display parts, and automobile parts. Carbon nanotubes are used in these parts to impart an antistatic property, electrical conductivity, radio wave absorption property, electromagnetic shielding property, near infrared blocking property and so on. As carbon nanotubes have high aspect ratios, even a small amount of them can form an electrically conductive path. Because of this, they have the potential to become electrically conductive materials with outstanding optical transparency and detachment resistance compared to conventional electrically conductive fine particles based on carbon black, etc. An optical-purpose transparent electrically conductive film using carbon nanotubes, for instance, is well-known (Patent Documents 1 and 2). To obtain an electrically conductive film with excellent optical transparency using carbon nanotubes, it is necessary to efficiently form an electrically conductive path with a small number of carbon nanotubes by breaking up thick carbon nanotube bundles or cohesive aggregates consisting of several tens of carbon nanotubes and highly dispersing them. Examples of a known method to obtain such an electrically conductive film include the coating of a base with a dispersion liquid created by highly dispersing carbon nanotubes in a solvent. Techniques to highly disperse carbon nanotubes in a solvent include the use of a dispersant (Patent Documents 1 and 2). To disperse carbon nanotubes as highly as possible, it is particularly advantageous to disperse them in an aqueous solvent using an ionic polymer dispersant having an ionic functional group, such as sulfonic acid or carboxylic acid (Patent Document 2). The method for producing a carbon nanotube dispersion liquid includes a method in which a stirring treatment and an ultrasonic treatment are used in combination (Patent Document 3).

### Prior Art Documents

#### Patent Documents

Patent Document 1: JP 2006-269311 A
Patent Document 2: JP 2010-254546 A
Patent Document 3: WO 2009-098779

### Summary of the Invention

#### Problems to be Solved by the Invention

In a conventional carbon nanotube dispersion liquid, there was a need to use an ionic polymer dispersant so as to obtain a dispersion liquid with excellent dispersibility. When an electrically conductive film is formed using such a dispersion liquid, since a dispersant having hydrophilic groups remains in an electrically conductive film, the moisture absorption and swelling of the dispersant under an environment such as high temperature and high humidity causes the electrical conductivity and the like to change, thus resulting in a problem such as deterioration of the resistance stability. Meanwhile, there was also a problem that a dispersion liquid using a dispersant having no hydrophilic group is inferior in dispersibility of carbon nanotubes and is also inferior in electrical conductivity.

Devised to address the above situation, the present invention aims to provide a carbon nanotube dispersion

liquid which allows an electrically conductive molded body made therefrom to exert a high electrical conductivity and resistance to heat and humidity, still maintaining a high dispersion of carbon nanotubes, and a method for manufacturing the same.

Means for Solving the Problems

As a result of carrying out intensive studies to solve the aforementioned problems, the inventors of the present invention have found that a dispersion liquid having a high dispersion can be obtained using a dispersant with no hydrophilic group by dispersing a cellulose derivative having a specific structure, which is used as a dispersant for dispersion of a carbon nanotube-containing composition, in a specific organic solvent.

Namely, the present invention relates to a carbon nanotube dispersion liquid comprising a carbon nanotube-containing composition, a cellulose derivative including a constitutional unit represented by the general formula (1), and an organic solvent, wherein the organic solvent contains one or more solvents selected from aprotic polar solvents or terpenes, the concentration of the carbon nanotube-containing composition contained in the carbon nanotube dispersion is 1% by mass or less, and when the dispersion liquid is subjected to a centrifugal treatment at 10, 000 G for 10 minutes to recover 90% by volume of the supernatant, the concentration of the carbon nanotube dispersion liquid of the supernatant portion accounts for 80% or more of the concentration of the carbon nanotube dispersion liquid before the centrifugal treatment:

[Chemical Formula 1]

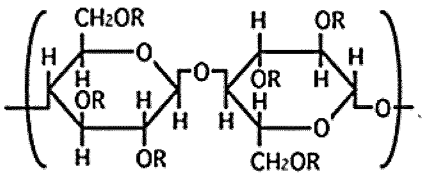

· · · (1)

wherein R may be the same or different and each independently represent H, or a linear or branched alkyl group having 1 to 40 carbon atoms or an acyl group.

The present invention also relates to an electrically conductive molded body obtained by forming a film of the above carbon nanotube dispersion liquid on a base and removing an organic solvent.

Advantage Effects of the Invention

Using the carbon nanotube dispersion liquid of the present invention allows an electrically conductive molded body having a high electrical conductivity and an excellent resistance to heat and humidity to be obtained.

Description of Preferred Embodiments

The present invention uses a carbon nanotube-containing composition as an electrically conductive material. For the purpose of the present invention, a carbon nanotube-containing composition means the whole mixture containing a plurality of carbon nanotubes. There are no specific limitations on the mode of existence of carbon nanotubes in a carbon nanotube-containing composition, so that they can exist in a range of states, such as independent, bundled and entangled, or in any combination of those states. A carbon nanotube-containing composition can also contain diverse carbon nanotubes in terms of the number of walls or diameter. Any dispersion liquid, composition containing other ingredients or complex as a composite mixture with other components is deemed to contain a carbon nanotube-containing composition as long as a plurality of carbon nanotubes are contained. A carbon nanotube-containing composition may contain impurities attributable to the carbon nanotube production method (e.g. catalysts and amorphous carbon).

A carbon nanotube has a cylindrical shape formed by rolling a graphite sheet. If rolled once, it is a single-walled

carbon nanotube, and if rolled twice, it is a double-walled carbon nanotube. In general, if rolled multiple times, it is a multi-walled carbon nanotube.

According to the usage characteristics required, the carbon nanotube-containing composition may employ any of a single-walled, double-walled, and multi-walled carbon nanotube. If carbon nanotubes with fewer walls (e.g. single to quintuple-walled) are used, an electrically conductive molded body with high electrical conductivity as well as high optical transparency can be obtained. Using carbon nanotubes with two or more walls makes it possible to obtain an electrically conductive molded body with low light wavelength dependence in terms of optical characteristics. To obtain an electrically conductive molded body with high optical transparency, it is preferable that at least 50 single to quintuple-walled carbon nanotubes, more preferably at least 50 double to quintuple-walled carbon nanotubes, be contained in every 100 carbon nanotubes. It is particularly preferable that at least 50 double-walled carbon nanotubes be present in every 100 carbon nanotubes as it gives rise to very high electrical conductivity and dispersibility. Multi-walled carbon nanotubes with six or more walls have a low degree of crystallinity and low electrical conductivity, as well as large diameter, so that the transparent conductivity of an electrically conductive molded body becomes low due to a smaller number of contacts per unit quantity of carbon nanotubes in the electrically conductive layer.

The number of walls of carbon nanotubes may, for instance, be measured by preparing a sample as follows. When the carbon nanotube-containing composition is dispersed in a medium, the dispersion liquid is diluted with the medium added to the composition to bring the concentration of the composition to a suitable level in terms of the visual observability of carbon nanotubes, and several drops of it are dropped onto a grid and air-dried. After that, the carbon nanotube-containing composition on the grid is observed using a direct transmission electron microscope. The number of carbon nanotube walls in an electrically conductive molded body can be examined by embedding the electrically conductive molded body in an epoxy resin, then slicing the embedded body to a thickness of 0.1 μm or less using a microtome and the like, and observing the slices using a transmission electron microscope. The carbon nanotube-containing composition may also be extracted from an electrically conductive molded body using a solvent and observed using a transmission electron microscope in a similar manner to a carbon nanotube-containing composition. The concentration of the carbon nanotube-containing composition in a dispersion liquid to be dropped onto the grid may be any value, as long as each carbon nanotube can be individually observed. A typical example is 0.001% by mass.

The measurement of the number of walls of carbon nanotubes as described above may, for instance, be performed in the following manner. Using a transmission electron microscope, an observation is conducted at a magnification ratio of 400,000×. From various 75 nm-square areas as observed in the field of view, one covered by carbon nanotubes by at least 10% is randomly chosen, and the number of walls is measured for 100 carbon nanotubes randomly sampled from the area. If 100 carbon nanotubes cannot be measured in a single field-of-view area, carbon nanotubes are sampled from two or more areas until the number reaches 100. In this regard, a carbon nanotube is counted as one as long as part of it is seen in the field-of-view area, and it is not an absolute requirement that both ends be visible. If seemingly two carbon nanotubes according to their appearance in one field-of-view area may possibly be connected outside the area, they are counted as two.

Though there are no specific limitations on the diameters of carbon nanotubes, the diameters of carbon nanotubes having a wall or walls that fall within the preferable number range as specified above range from 1 nm to 10 nm, with those lying within the 1 to 3 nm diameter range particularly advantageously used.

Carbon nanotubes may be modified by a functional group or alkyl group on the surface or at terminals. For instance, carbon nanotubes may be heated in an acid to have functional groups such as a carboxyl group and hydroxyl group incorporated thereby. Carbon nanotubes may also be doped with an alkali metal or halogen. Doping carbon nanotubes is preferable as it improves their electrical conductivity.

If carbon nanotubes are too short, an electrically conductive path cannot be efficiently formed, so that their average length is preferably 0.5 μm or more. If, on the other hand, carbon nanotubes are too long, dispersibility tends to be small, so that their average length is preferably 10 μm or less.

As described later, the average length of carbon nanotubes in a dispersion liquid may be studied using an atomic force microscope (AFM) . When a carbon nanotube-containing composition is measured, several μL thereof is dropped onto a mica base, air-dried, and then observed with an atomic force microscope, during which a photograph of one 30 μm-square field-of-view area which contains at least 10 carbon nanotubes is taken, and then the length of each carbon nanotube randomly sampled from the area is measured along the lengthwise direction. If 100 carbon nanotubes cannot be measured in a single field-of-view area, carbon nanotubes are sampled from a plurality of areas until the number reaches 100. Measuring the lengths of a total 100 carbon nanotubes makes it possible to determine the length distribution of carbon nanotubes.

It is preferable that carbon nanotubes whose length is 0.5 μm or less be present at a rate of 30 or less per every 100 carbon nanotubes, as it makes it possible to reduce contact resistance and improve light transmittance. It is also preferable that carbon nanotubes whose length is 1 μm or less be present at a rate of 30 or less per every 100 carbon nanotubes. It is also preferable that carbon nanotubes whose length is 10 μm or more be present at a rate of 30 or less per every 100 carbon nanotubes, as it makes it possible to improve dispersibility.

To obtain an electrically conductive molded body with excellent transparent conductivity, it is preferable to use high-quality carbon nanotubes with high degrees of crystallinity. Carbon nanotubes with high degrees of crystallinity do exhibit excellent electrical conductivity. However, such high-quality carbon nanotubes form more cohesive bundles and aggregates compared to carbon nanotubes with low degrees of crystallinity, so that it is very difficult to highly disperse them on a stable basis by breaking them up into individual carbon nanotubes. For this reason, when obtaining an electrically conductive molded body with excellent electrical conductivity using carbon nanotubes with high degrees of crystallinity, the carbon nanotube dispersion technique plays a very important role.

Though there are no specific limitations on the type of carbon nanotubes, it is preferable that they be linear carbon nanotubes with high degrees of crystallinity because of their high electrical conductivity. Carbon nanotubes with good linearity are carbon nanotubes that contain few defects. The degree of crystallinity of a carbon nanotube can be evaluated using a Raman spectroscopic analysis. Of various laser wavelengths available for a Raman spectroscopic analysis, 532 nm is used here. The Raman shift observed near 1590 $cm^{-1}$ on the Raman spectrum is called the "the G band", attributed to graphite, while the Raman shift observed near 1350 $cm^{-1}$ is called the "the D band", attributed to defects in amorphous carbon or graphite. This means that the higher the G/D ratio, the ratio of the peak height of the G band to the peak height of the D band, the higher the linearity, the degree of crystallinity and hence of the quality of the carbon nanotube.

The higher the G/D ratio is, the better it is, but a carbon nanotube-containing composition is deemed high quality as long as this ratio is 20 or more. The G/D ratio is preferably 30 or more, more preferably 50 or more. Though there is no specific upper limit, the common range is 200 or less. When applied to solids, Raman spectroscopic analysis sometimes exhibits a scattering of measurements depending on sampling. For this reason, at least three different positions are subjected to a Raman spectroscopy analysis, and the arithmetic mean is taken.

The carbon nanotube dispersion liquid of the present invention is characterized in that carbon nanotubes are highly dispersed in an organic solvent although the dispersant is used in a relatively small amount. As a result of intensive studies on the composition of carbon nanotube dispersion liquids, the inventors of the present invention have found that it is possible to obtain a dispersion liquid in an organic solvent in which carbon nanotubes are highly dispersed by using a cellulose derivative having a specific structure as a dispersant and dispersing the cellulose derivative in a specific organic solvent. The inventors of the present invention have also found that, since the cellulose derivative having a specific structure used in the present invention has no hydrophilic functional group in general, an electrically conductive molded body produced using the carbon nanotube dispersion liquid is made less susceptible to humidity, and hence the resistance to heat and humidity of the electrically conductive molded body is enhanced.

The dispersion liquid of a carbon nanotube-containing composition of the present invention uses, as a dispersant, a cellulose derivative having a specific structure shown below:

[Chemical Formula 2]

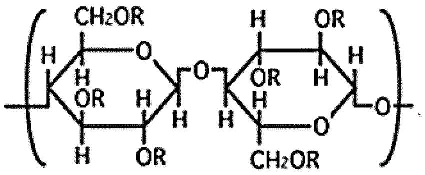

· · · (1)

wherein R may be the same or different and each independently represent H, or a linear or branched alkyl group having 1 to 40 carbon atoms or an acyl group.

Specifically, when the cellulose derivative is a cellulose ether, examples thereof include methyl cellulose, ethyl cellulose, propyl cellulose, methyl ethyl cellulose, methyl propyl cellulose, ethyl propyl cellulose and the like. When the cellulose derivative is a cellulose ester, examples thereof include cellulose acetate, cellulose propionate, cellulose butyrate, cellulose valerate, cellulose stearate, cellulose acetate propionate, cellulose acetate butyrate, cellulose acetate valerate, cellulose acetate caproate, cellulose propionate butyrate, cellulose acetate propionate butyrate and the like. When the cellulose derivative is a cellulose ether ester, examples thereof include, but are not limited to, methyl cellulose

acetate, methyl cellulose propionate, ethyl cellulose acetate, ethyl cellulose propionate, propyl cellulose acetate, propyl cellulose propionate and the like.

The total substitution degree of the cellulose derivative can be appropriately selected depending on the objective dispersibility, solubility in a solvent and the like, but is preferably 1.5 or more. The total degree of substitution means the sum of the average degree of substitution of each substituent bonded to the three hydroxyl groups at the 2-, 3- and 6-positions present in glucose which is a constitutional unit of cellulose, so that the maximum value of the total degree of substitution is 3. If the total degree of substitution is less than 1.5, the solubility in the organic solvent deteriorates or an influence of moisture absorption of the dispersant appears due to the influence of the hydroxyl groups at the 2-, 3- and 6-positions remaining in the unsubstituted state, which is not preferable. The total degree of substitution is more preferably 2 or more.

The dispersant may be used alone, or a mixture of two or more dispersants may be used. Use of a dispersant with good dispersibility enables an improvement in transparent conductivity by breaking up of bundles of carbon nanotubes.

When the cellulose derivative having the above structure is used as the dispersant, side chain alkyl groups, which interact with the carbon nanotubes at the glucose backbone moiety leading to the substitution of hydroxyl groups at the 2-, 3- and 6-positions, interact with the solvent, and thus carbon nanotubes can be highly dispersed in the organic solvent. In this instance, if the molecular weight of the dispersant is too small, the ability to break up bundles of carbon nanotubes deteriorates since the interaction between the dispersant and carbon nanotubes decreases. Meanwhile, the molecular weight of the dispersant is too large, it is difficult for the dispersant to get into the bundles of carbon nanotubes. As a result, the fragmentation of carbon nanotubes tends to progress before the breaking up of bundles during the dispersion treatment. Using a cellulose derivative having a weight-average molecular weight of 10,000 to 150,000 as a dispersant facilitates the dispersant getting into the gaps between carbon nanotubes during dispersion, enhancing the dispersibility of the carbon nanotubes, which is preferable. Moreover, the coagulation of such carbon nanotubes is suppressed when they are applied to a base to coat it, so that the electrical conductivity and transparency of the obtained electrically conductive molded body become satisfactory. From the viewpoint of achieving good dispersibility with only a small amount of dispersant, the weight-average molecular weight of the dispersant is more preferably in the range of 20,000 or more and 100,000 or less. In this regard, "weight-average molecular weight" refers to weight-average molecular weight determined by gel permeation chromatography, as calibrated using a calibration curve made with polyethylene glycol or polystyrene as a standard sample. To enable the cellulose derivative to have such the molecular weight, the polymerization degree n of the constitutional unit represented by the general formula (1) is preferably in a range of 10 or more and 500 or less.

Dispersants with a weight-average molecular weight in the aforementioned range may be obtained through synthesis aimed at bringing the weight-average molecular weight into this range or hydrolysis, etc. aimed at turning high molecular weight dispersants into low molecular weight ones.

It is preferable that the amount of dispersant contained in the carbon nanotube dispersion liquid be greater than the amount adsorbed by carbon nanotubes but not as much as the amount that would impede electrical conductivity. The content of the dispersant in the carbon nanotube dispersion liquid is preferably 10 parts by mass or more and 500 parts by mass or less based on 100 parts by mass of the carbon nanotube-containing composition. The content of the dispersant is more preferably 30 parts by mass or more based on 100 parts by mass of the carbon nanotube-containing composition. The content is still more preferably 300 parts by mass or less. If the content of the dispersant is less than 10 parts by mass, the bundles of carbon nanotubes are not sufficiently broken up, so that the dispersibility tends to be lower. Meanwhile, if the content is more than 500 parts by weight, the excessive dispersant impedes the electrically conductive path and worsens the electrical conductivity.

The present invention is characterized by containing, as the solvent, one or more solvents selected from aprotic polar solvents or terpenes. There has hitherto been known, as organic solvents for dissolving a cellulose derivative, many solvents such as alcohols, ketones, esters, ethers, ether alcohols, aromatic hydrocarbons and halogen-based solvents. The inventors of the present invention have found that, when the above-mentioned cellulose derivative having a specific structure is used as a dispersant for carbon nanotubes, the dispersibility of carbon nanotubes is dramatically improved by using an aprotic polar solvent or terpenes as the solvent, thus obtaining a dispersion liquid in which carbon nanotubes are highly dispersed.

As the aprotic polar solvent, N-methylpyrrolidone, N,N-dimethylformamide, dimethyl sulfoxide, acetonitrile and the like are preferable. It is particularly preferable to use N-methylpyrrolidone. Examples of the terpenes include limonene, myrcene, pinene, menthane, terpinolene, terpinene, cymene, menthol, terpineol, dihydroterpineol and the like. Terpineol is particularly preferable.

The carbon nanotube dispersion liquid is prepared using a carbon nanotube-containing composition, a dispersant and an organic solvent. At this time, in view of ease of handling of the dispersion liquid and the dispersibility, the carbon nanotube dispersion liquid is prepared so that the concentration of the carbon nanotube-containing composition in the dispersion becomes 1% by mass or less. The concentration of the carbon nanotube-containing composition in

the dispersion liquid is preferably 0.8% by mass or less, more preferably 0.5% by mass or less, still more preferably 0.3% by mass or less, and yet more preferably 0.1% by mass or less. The concentration of the carbon nanotube-containing composition in the dispersion liquid is preferably 0.0001% by mass or more. Since the carbon nanotube dispersion liquid having such a concentration generally becomes liquid, the dispersibility is easily improved and it is also easy to handle, which is preferable.

The dispersion liquid of the present invention is characterized in that carbon nanotubes are highly dispersed in an organic solvent. The term "highly dispersed" means that, when the dispersion liquid is centrifuged at 10,000 G for 10 minutes to recover 90% by volume of the supernatant, the concentration of the carbon nanotube dispersion liquid of the supernatant portion accounts for 80% or more of the concentration of the carbon nanotube dispersion liquid before the centrifugal treatment. The fact that the concentration of the carbon nanotube dispersion liquid in the supernatant portion is in the above range means that most carbon nanotubes remain in the supernatant without sedimentation even after the centrifugal treatment because of high dispersibility of the carbon nanotubes.

It is possible to use, as a method to prepare a dispersion liquid of the present invention, a method in which a carbon nanotube-containing composition, a dispersant and a solvent are mixed and dispersed using a general mixing and dispersing machine for paint production, e.g., a stirring mill, a vibration mill, planetary mill, a ball mill, a bead mill, a sand mill, a jet mill, a homogenizer, an ultrasonic homogenizer, a high-pressure homogenizer, an ultrasonic device, an attritor, a dissolver, or a paint shaker. The use of a stirring treatment and an ultrasonic treatment is particularly preferable as it improves the dispersibility of the carbon nanotube-containing composition.

In the stirring treatment, aggregation of the carbon nanotube-containing composition is broken up and dispersed by utilizing collision of the carbon nanotubes with each other and a shear force of the solvent caused by charging the carbon nanotube-containing composition and the solvent in a vessel and rotating a stirring blade at a high speed. In the stirring treatment, it is preferable to adjust the rotating speed so as to highly disperse a graphite structure of the carbon nanotube-containing composition without breaking the graphite structure as much as possible. A specific rotational speed is preferably 3,000 to 50,000 rpm from the viewpoint of the dispersibility and the electrical conductivity. The rotational speed is more preferably 10,000 to 30,000 rpm, and still more preferably from 15,000 to 25,000 rpm. If the rotating speed of the stirring treatment is less than 3,000 rpm, the dispersibility of the obtained dispersion liquid may deteriorate because of lack of the shear force. At the rotating speed of more than 50,000 rpm, carbon nanotubes contained in the obtained dispersion liquid may be damaged by stirring to cause deterioration of the electrical conductivity, which is not preferable. In the stirring treatment, it is preferable to adjust the stirring time so as to highly disperse a graphite structure of the carbon nanotube-containing composition without breaking the graphite structure as much as possible. A specific stirring time is preferably 10 seconds to 2 hours from the viewpoint of the dispersibility and the electrical conductivity. The stirring time is more preferably 30 seconds to 30 minutes, and still more preferably 1 minute to 5 minutes. If the time of the stirring treatment is less than 10 seconds, the dispersibility of the obtained dispersion liquid may deteriorate because of lack of the shear force. If the time is more than 2 hours, the carbon nanotubes contained in the obtained dispersion liquid are damaged by stirring to cause deterioration of the conductivity, which is not preferable.

In the stirring treatment, it is preferable to adjust the temperature so as to highly disperse a graphite structure of the carbon nanotube-containing composition without breaking the graphite structure as much as possible. Although the specific temperature conditions vary depending on the solvent, the temperature may be any temperature as long as the solvent maintains a liquid form.

A preferred apparatus for performing such stirring treatment is "MILLSER" (manufactured by Iwatani Corporation), but is not limited thereto.

In the ultrasonic treatment, it is preferable to adjust the ultrasonic irradiation output, the dispersion time and the like so as to disperse a graphite structure of the carbon nanotube-containing composition at a high level without breaking the graphite structure as much as possible.

Specific ultrasonic treatment conditions are as follows: an ultrasonic irradiation dose obtained from the following equation (1) is preferably 1 to 500 kW·min/g, more preferably 10 kW·min/g to 400 kW·min/g, and still more preferably 15 kW·min/g to 300 kW·min/g.

$$\text{Ultrasonic irradiation dose (kW·min/g)} = \text{irradiation output (kW)} \times \text{dispersion time (min)} / \text{dry carbon nanotube-containing composition (g)} \quad (1)$$

If the ultrasonic irradiation dose in ultrasonic treatment is less than 1 kW·min/g, the dispersibility of the obtained dispersion liquid may deteriorate because of lack of the shear force. Whereas, if the ultrasonic irradiation dose is more than 500 kW·min/g, the carbon nanotubes contained in the obtained dispersion liquid may be damaged by stirring to cause

deterioration of the conductivity.

The degree of crystallinity of the carbon nanotube-containing composition in the carbon nanotube dispersion liquid can be evaluated using Raman spectroscopic analysis. Of various laser wavelengths available for a Raman spectroscopic analysis, 532 nm is used. The Raman shift observed near 1,590 $cm^{-1}$ on the Raman spectrum is called the "G band", attributed to graphite, while the Raman shift observed near 1,350 $cm^{-1}$ is called the "D band", attributed to defects in amorphous carbon or graphite. This means that the higher the G/D ratio, the ratio of the peak height of the G band to the peak height of the D band, the higher the linearity, the degree of crystallinity and hence of the quality of the carbon nanotube.

The higher the G/D ratio of the carbon nanotube-containing composition in the carbon nanotube dispersion liquid is, the better it is, but a carbon nanotube electrically conductive molded body with excellent electrical conductivity can be obtained as long as this ratio is 20 or more. It is preferably 30 or more, more preferably 50 or more. Though there is no specific upper limit, the common range is 200 or less. When applied to dispersion liquids, Raman spectroscopic analysis sometimes exhibits a scattering of measurements depending on sampling. For this reason, at least three different positions are subjected to a Raman spectroscopy analysis, and the arithmetic mean is taken.

Apart from the dispersant and the carbon nanotube-containing composition as described above, a dispersion liquid of a carbon nanotube-containing composition may contain other ingredients, such as a surface active agent, electrically conductive polymer, non-electrically conductive polymer and various other polymer materials to the extent that the advantageous effect of the present invention is not undermined.

Applying the carbon nanotube dispersion liquid of the present invention to a base using a method described below can form an electrically conductive molded body having a base on which an electrically conductive layer containing the carbon nanotube-containing composition is formed.

There are no specific limitations on the shape, size or material of the base, as long as it can be amenable to coating with a carbon nanotube dispersion liquid and allows the resulting electrically conductive layer to stick to it, so that a selection can be made according to the purpose. Specific examples of the base include films, sheets, plates, paper, fibers, and particles. The material of a base may, for instance, be selected from resins of organic materials, such as polyester, polycarbonate, polyamide, acrylic, polyurethane, polymethyl methacrylate, cellulose, triacetyl cellulose and amorphous polyolefin. In the case of inorganic materials, available choices include metals, such as stainless steel, aluminum, iron, gold and silver; glass; carbon-based materials; and the like.

Using a resin film as a base is preferable as it makes it possible to obtain an electrically conductive film with excellent adhesiveness, conformity to tensile deformation, and flexibility. There are no specific limitations on the thickness of a base, so that it can, for instance, be set at approximate 1 to 1,000 $\mu$m. In a preferred embodiment, the thickness of a base has been set in the approximate range of 5 to 500 $\mu$m. In a more preferred embodiment, the thickness of a base has been set in the approximate range of 10 to 200 $\mu$m.

If necessary, a base may undergo a corona discharge treatment, ozone treatment, or glow discharge or other surface hydrophilization treatment. It may also be provided with an undercoat layer. It is preferable that the material for the undercoat layer be highly hydrophilic.

It is also possible to use, as the base, a base that has been provided with a hard coat treatment, designed to impart wear resistance, high surface hardness, solvent resistance, pollution resistance, anti-fingerprinting and other characteristics, on the side opposite to the one coated with a carbon nanotube dispersion liquid.

The use of a transparent base is preferable as it makes it possible to obtain an electrically conductive molded body with excellent transparency and electrical conductivity. In this regard, transparency exhibits a total light transmittance of 50% or more.

After forming an electrically conductive molded body by coating a base with a carbon nanotube dispersion liquid, it is preferable that a binder material be further used to form an overcoat layer on the electrically conductive layer containing carbon nanotubes. An overcoat layer is effective in dispersing and mobilizing electric charges.

A binder material may be added to the carbon nanotube dispersion liquid and, if necessary, dried or baked (hardened) through heating after the coating of the base. The heating conditions are set according to the binder material used. If the binder is light-curable or radiation-curable, it is cured through irradiation with light or energy rays, rather than heating, after the coating of the base. Available energy rays include electron rays, ultraviolet rays, x-rays, gamma rays and other ionizing radiation rays. The irradiation dose is determined according to the binder material used.

There are no specific limitations on the binder material as long as it is suitable for use in an electrical conductivity paint, so that various transparent inorganic polymers and precursors thereof (hereinafter may be referred to as "inorganic polymer-based binders") and organic polymers and precursors thereof (hereinafter may be referred to as "organic polymer-based binders") are all available options.

Examples of an inorganic polymer-based binder include a sol of a metal oxide, such as silica, oxidized tin, aluminum oxide or zirconium oxide, or hydrolysable or pyrolyzable organometallic compound which is a precursor to any such inorganic polymer (e.g. an organic phosphorus compound, organic boron compound, organic silane compound, organic titanium compound, organic zirconium compound, organic lead compound or organic alkaline earth metal compound). Concrete examples of a hydrolysable or pyrolyzable organometallic compound include a metal alkoxide or partial hydrolysate thereof; a low carboxylate, such as a metal salt of acetic acid; or a metal complex, such as acetylacetone.

Calcinating any such inorganic polymer-based binder results in the formation of a transparent inorganic polymer film or matrix based on a metal oxide or composite oxide. An inorganic polymer generally exhibits a glass-like quality with high hardness, excellent abrasion resistance and high transparency.

Examples of an organic polymer-based binder include a thermoplastic polymer, a thermosetting polymer, or a radiation-curable polymer. Examples of a suitable organic binder include a polyolefin (e.g. polyethylene or polypropylene), polyamide (e.g. nylon 6, nylon 11, nylon 66 or nylon 6,10), polyester (e.g. polyethylene terephthalate or polybutylene terephthalate), silicone resin, vinyl resin (e.g. polyvinyl chloride, polyvinylidene chloride, polyacrylonitrile, polyacrylate, polystyrene derivative, polyvinyl acetate or polyvinyl alcohol), polyketone, polyimide, polycarbonate, polysulfone, polyacetal, fluorine resin, phenol resin, urea resin, melamine resin, epoxy resin, polyurethane, cellulose-based polymer, protein (gelatin or casein), chitin, polypeptide, polysaccharides, polynucleotide or other organic polymer or a precursor of any such polymer (monomer or oligomer). These are all capable of forming a transparent film or matrix through simple solvent evaporation or through heat curing, light irradiation curing, or radiation irradiation curing.

Of these, preferable organic polymer-based binders are compounds having unsaturated bonds amenable to radical polymerization and curing via radiation, namely, monomers, oligomers and polymers having vinyl or vinylidene groups. Examples of such a monomer include a styrene derivative (e.g. styrene or methyl styrene), acrylic acid or methacrylic acid or a derivative thereof (e.g. an alkyl acrylate, or methacrylate, allyl acrylate or methacrylate), vinyl acetate, acrylonitrile and itaconate. Preferable oligomers and polymers are compounds having double bonds in their backbone chains and compounds having an acryloyl or methacryloyl group at both ends of linear chains. Any radical polymerization-curable binder is capable of forming a film or matrix having high hardness, excellent abrasion resistance and high transparency.

The suitable amount of binder to be used is such that it is sufficient to form an overcoat layer or, in the case of being blended into the dispersion liquid, give suitable viscosity for the coating of the base. Too small an amount makes application difficult, but too large an amount is also undesirable as it impedes electrical conductivity.

There are no specific limitations on the method to coat a base with a carbon nanotube dispersion liquid. Any generally known coating method, such as micro gravure coating, wire bar coating, die coating, spray coating, dip coating, roll coating, spin coating, doctor knife coating, kiss coating, slit coating, slit die coating, gravure coating, blade coating or extrusion coating, as well as screen printing, gravure printing, ink jet printing, or pad printing may be used. Coating may take place as many times as possible and two different coating methods may be combined. Most preferably, the coating method is selected from micro gravure coating, die coating and wire bar coating.

There are no specific limitations on the coating thickness of the carbon nanotube dispersion liquid (wet thickness) as long as the desired electrical conductivity can be obtained, since the suitable thickness depends on, among other things, the concentration of the liquid. Still, it is preferable that the thickness be in the 0.01 $\mu$m to 50 $\mu$m range. More preferably, it is 0.1 $\mu$m to 20 $\mu$m.

After the carbon nanotube dispersion liquid is applied to a base, the carbon nanotube dispersion liquid is dried to remove the solvent, thus forming an electrically conductive molded body in which an electrically conductive layer having a three-dimensional network structure including a carbon nanotube-containing composition and a dispersant is fixed on the base. The preferable method to remove the solvent is drying by heating. The drying temperature may be any temperature as long as it is high enough for the removal of the solvent but not higher than the heat resistant temperature of the base. When the base is a resin-based base, the drying temperature is preferably 50°C to 250°C, more preferably 80°C to 150°C.

Though there are no specific limitations on the preferable thickness of the post-drying electrically conductive layer containing a carbon nanotube-containing composition (dry thickness) as long as the desired electrical conductivity can be obtained, it is preferable that the thickness be in the 0.001 $\mu$m to 5 $\mu$m range.

An electrically conductive molded body obtained by applying the carbon nanotube dispersion liquid of the present invention has an electrically conductive layer in which carbon nanotubes are sufficiently dispersed and thus exhibits adequate electrical conductivity even with a small amount of carbon nanotubes, hence having excellent transparency if using a transparent base. The total light transmittance of the electrically conductive molded body is preferably at least 50%.

Light transmittance and surface resistance are mutually exclusive because if the coating amount of the carbon nanotube dispersion liquid is decreased to increase light transmittance, surface resistance increases, and if the coating amount is increased to lower the surface resistance, light transmittance decreases. The carbon nanotube dispersion liquid of the present invention makes it possible to obtain an electrically conductive molded body with excellent electrical conductivity and transparency as it is able to decrease the surface resistance of the electrically conductive layer while maintaining the dispersibility of carbon nanotubes. As a result, it is even possible to obtain an electrically conductive molded body with both a surface resistance of 1 $\Omega/\square$ to $10^8$ $\Omega/\square$ and a total light transmittance of 50% or more. It is preferable that the total light transmittance of an electrically conductive molded body be 60% or more, more preferably

70% or more, even more preferably 80% or more and the most preferably 90% or more. The surface resistance of an electrically conductive molded body is preferably 100 to 10, 000 Ω/□, and more preferably 10 to 1, 000 Ω/□.

As mentioned above, the electrically conductive molded body obtained by applying the carbon nanotube dispersion liquid of the present invention is not easily influenced by humidity and has satisfactory resistance to heat and humidity. The resistance to heat and humidity can be evaluated by measuring the surface resistance (initial surface resistance $R_0$) of an electrically conductive molded body immediately after the production and the surface resistance R of the electrically conductive molded body after being left to stand overnight in an environment at 23°C and 90% RH, and calculating a resistance change ratio $(R-R_0)/R_0$ from the surface resistance before and after being left to stand. The resistance change ratio is preferably 15% or less, more preferably 10% or less, and still more preferably 5% or less. The lower limit of the resistance change ratio does not change, i.e., 0%.

An electrically conductive molded body obtained by applying a dispersion liquid of carbon nanotubes of the present invention as a coat exhibits high electrical conductivity, so that it can be used as cleanroom parts, such as static dissipative shoes and anti-static plates, and display/automobile parts, such as electromagnetic shielding materials, near-infrared blocking materials, transparent electrodes, touch panels and radio wave absorbing materials. Of these, it particularly exhibits excellent performance as touch panels, mainly required to satisfy smooth surface needs, and display-related transparent electrodes, found in liquid crystal displays, organic electroluminescence displays, electronic paper, and the like.

The present invention will be described in more detail by way of Examples. However, the present invention is not limited to the following Examples.

## Examples

Evaluation methods used in the Examples are as follows.

<Evaluation of Carbon Nanotube-Containing Composition>

[Analysis of G/D Ratio of Carbon Nanotube-Containing Composition]

A powder sample was set in a resonance Raman spectroscope (INF-300, manufactured by Horiba Jobin Yvon S.A.S.), and the measurement was made using a 532 nm laser. In the measurement of the G/D ratio, analysis was performed for three different locations of the sample, with the arithmetic mean taken of the results.

[Observation of Outside Diameter Distribution and Number-Of-Walls Distribution of Carbon Nanotubes]

A carbon nanotube-containing composition (1 mg) was added to 1 mL of ethanol, and a dispersion treatment was performed for 15 minutes using an ultrasonic bath. A few drops of the dispersed sample were applied to a grid and dried. The grid coated with the sample in this manner was set in a transmission electron microscope (JEM-2100, manufactured by JEOL Ltd.), and measurements were performed. Observations of carbon nanotubes for outside diameter distribution and number-of-walls distribution were performed at a magnification of 400,000 times.

<Evaluation of Carbon Nanotube Dispersion Liquid>

[Analysis of G/D Ratio of Carbon Nanotubes]

A carbon nanotube dispersion liquid was dropped on a slide glass in a resonance Raman spectroscope (INF-300, manufactured by Horiba Jobin Yvon S.A.S.) and carbon nanotube solids were fabricated by drying the solvent, and then the measurement was made using a 532 nm laser. In the measurement of the G/D ratio, analysis was performed for three different locations of the sample, with the arithmetic mean taken of the results.

<Evaluation of Electrically Conductive Molded Body>

[Measurement of Surface Resistance]

Surface resistance was measured using a Loresta (registered trademark) resistance meter (EP MCP-T360, manufactured by Dia Instruments Co., Ltd.) in accordance with the four-probe method as specified in JIS K7194 (adopted in December 1994) . In the high resistance measurement, a Hiresta (registered trademark) resistance meter (UP MCP-HT450, manufactured by Dia Instruments Co., Ltd., 10V, 10 seconds) was used.

(Reference Example 1)

Using the method disclosed in Example 6 of JP 2011-148674 A (supported catalyst CVD method), a carbon nanotube-containing composition was produced and recovered. The average outside diameter of this carbon nanotube-containing composition was observed by a high resolution transmission electron microscope and found to be 1.7 nm. The ratio of double-walled carbon nanotubes was 90%, and the Raman G/D ratio measured at a wavelength of 532 nm was 80.

(Reference Example 2)

Using the method disclosed in Example 13 of Japanese Patent Application No. 2016-564654 (vapor phase flow method), a carbon nanotube-containing composition was produced and recovered. The average outside diameter of this carbon nanotube-containing composition was observed by a high resolution transmission electron microscope and found to be 2.0 nm. The ratio of double-walled carbon nanotubes was 65%, and the Raman G/D ratio measured at a wavelength of 532 nm was 103.

(Reference Example 3)

Mega Aqua Hydrophilic DM Coat (DM-30-26G-N1, manufactured by Ryowa Corporation) containing fine hydrophilic silica particles of about 30 nm and polysilicate was used as a coating liquid for the formation of a silica film.

Using a wire bar of #3, the above coating liquid for the formation of a silica film was applied to a biaxially stretched polyethylene terephthalate film (Lumirror (registered trademark) U46, manufactured by Toray Industries, Inc.) with a thickness of 188 μm. After the coating, drying was performed in a drier at 80°C for one minute.

By the procedure mentioned above, a base which has a hydrophilic silica undercoat layer having fine hydrophilic silica particles with a diameter of 30 nm exposed at the surface was fabricated using polysilicate as a binder.

(Example 1)

After weighing the carbon nanotube-containing composition (Raman G/D ratio: 80) disclosed in Reference Example 1 and ethyl cellulose (manufactured by The Dow Chemical Company, weight-average molecular weight: 40,000, substitution degree: 2.5 to 2.6) so that the content of ethyl cellulose became 300 parts by mass based on 100 parts by mass of the carbon nanotube-containing composition, N-methylpyrrolidone (NMP) was added to adjust the concentration of the carbon nanotube-containing composition in the carbon nanotube dispersion liquid to 0.1% by mass. Using an ultrasonic homogenizer, the mixture was subjected to an ultrasonic treatment at an irradiation dose of the ultrasonic treatment of 35 kW·min/g to prepare a carbon nanotube dispersion liquid. The G/D ratio of the carbon nanotube-containing composition in this dispersion liquid was 27.

The resulting carbon nanotube dispersion liquid was subjected to a centrifugal treatment in a high speed centrifugal separation machine operated at 10, 000 G for 10 minutes to obtain 90% by volume as the supernatant, thus obtaining a carbon nanotube dispersion liquid in the supernatant portion. After obtaining the supernatant, there was no sedimentation having the size recognizable by visual observation. The ratio of the concentration of carbon nanotubes in the supernatant portion to the concentration of carbon nanotubes before centrifugation (hereinafter referred to as the concentration ratio) was 96%, and it has been found that almost all the carbon nanotubes were present in the supernatant even after the centrifugation treatment.

After adjusting the concentration of the carbon nanotubes by adding NMP to the carbon nanotube dispersion liquid, the carbon nanotube dispersion liquid was applied to a base provided with an undercoat layer obtained in Reference Example 3 using a wire bar and then dried in a drier to fix the carbon nanotube-containing composition, thus forming an electrically conductive layer (hereinafter, a film having the carbon nanotube-containing composition fixed therein is referred to as a carbon nanotube-coated film).

With respect to the carbon nanotube-coated film thus obtained by the procedure mentioned above, an initial surface resistance $R_0$ was measured. Thereafter, the film was left to stand overnight in an environment at 23°C and 90% RH and, on the next, day, the surface resistance R was measured. A resistance change ratio $(R-R_0)/R_0$ was calculated from the surface resistance before and after being left to stand and, as a result, the resistance change ratio was 4%.

(Example 2)

In the same manner as in Example 1, except that the solvent was changed from NMP to terpineol, a carbon nanotube dispersion liquid was prepared. The concentration ratio of the carbon nanotube dispersion liquid before and

after the centrifugal treatment was 91% and it has been found that carbon nanotubes were highly dispersed, like NMP. The G/D ratio of the carbon nanotube-containing composition in this dispersion liquid was 27. Using this dispersion liquid, the carbon nanotube-coated film was formed in the same manner as in Example 1 and a resistance change ratio $(R-R_0)/R_0$ was calculated and, as a result, the resistance change ratio was 4%.

(Example 3).

In the same manner as in Example 1, except that the content of ethyl cellulose was changed to 100 parts by mass based on 100 parts by mass of the carbon nanotube-containing composition, a carbon nanotube dispersion liquid was prepared. The concentration ratio of the carbon nanotube dispersion liquid before and after the centrifugal treatment was 86% and it has been found that carbon nanotubes were highly dispersed. The G/D ratio of the carbon nanotube-containing composition in this dispersion liquid was 25. Using this dispersion liquid, the carbon nanotube-coated film was formed in the same manner as in Example 1 and a resistance change ratio $(R-R_0)/R_0$ was calculated and, as a result, the resistance change ratio was 3%.

(Example 4)

In the same manner as in Example 1, except that the irradiation dose of the ultrasonic treatment was changed to 2 kW-min/g, a carbon nanotube dispersion liquid was prepared. The concentration ratio of the carbon nanotube dispersion liquid before and after the centrifugal treatment was 91% and it has been found that carbon nanotubes were highly dispersed. The G/D ratio of the carbon nanotube-containing composition in this dispersion liquid was 46. Using this dispersion liquid, the carbon nanotube-coated film was formed in the same manner as in Example 1 and a resistance change ratio $(R-R_0)/R_0$ was calculated and, as a result, the resistance change ratio was 4%.

(Example 5)

After weighing a carbon nanotube-containing composition (manufactured by Meijo Nano Carbon, product number: EC1.5) and ethyl cellulose (manufactured by The Dow Chemical Company, weight-average molecular weight: 40,000, substitution degree: 2.5 to 2.6) so that the content of ethyl cellulose became 150 parts by mass based on 100 parts by mass of the carbon nanotube-containing composition, NMP was added to adjust the concentration of the carbon nanotube-containing composition in the carbon nanotube dispersion liquid to 0.01% by mass. The ratio of single-walled carbon nanotubes of carbon nanotubes was 56%, the average outside diameter was 1.7 nm, the Raman G/D ratio at 532 nm was 110. Using an ultrasonic homogenizer, the mixture was subjected to an ultrasonic treatment at an irradiation dose of the ultrasonic treatment of 300 kW·min/g to prepare a carbon nanotube dispersion liquid. The concentration ratio of the carbon nanotube dispersion liquid before and after the centrifugal treatment was measured in the same manner as in Example 1 and found to be 98%, and it has been found that carbon nanotubes were highly dispersed. The G/D ratio of the carbon nanotube-containing composition in this dispersion liquid was 23. Using this dispersion liquid, the carbon nanotube-coated film was formed in the same manner as in Example 1 and a resistance change ratio $(R-R_0)/R_0$ was calculated and, as a result, the resistance change ratio was 3%. Further, this dispersion liquid was printed by an ink jet method, and it has been found that a uniform film was formed and it was also applicable to ink jet printing.

(Example 6)

After weighing the carbon nanotube-containing composition (Raman G/D ratio: 80) disclosed in Reference Example 1 and ethyl cellulose (manufactured by The Dow Chemical Company, weight-average molecular weight: 40,000, substitution degree: 2.5 to 2.6) so that the content of ethyl cellulose became 300 parts by mass based on 100 parts by mass of the carbon nanotube-containing composition, terpineol was added to adjust the concentration of the carbon nanotube-containing composition in the carbon nanotube dispersion liquid to 0.1% by mass. Next, a stirring treatment was performed at 25°C and a rotating speed of 22,500 rpm for 3 minutes to prepare a carbon nanotube dispersion liquid. The concentration ratio before and after the centrifugal treatment was measured in the same manner as in Example 1 and found to be 100%, and it has been found that almost all the carbon nanotubes in the dispersion liquid were present in the supernatant even after the centrifugation treatment. The G/D ratio of the carbon nanotube-containing composition in this dispersion liquid was 72. Using this dispersion liquid, the carbon nanotube-coated film was formed in the same manner as in Example 1 and a resistance change ratio $(R-R_0)/R_0$ was calculated and, as a result, the resistance change ratio was 4%.

(Example 7)

In the same manner as in Example 6, except that the content of ethyl cellulose was changed to 100 parts by mass based on the carbon nanotube-containing composition, a carbon nanotube dispersion liquid was prepared. The concentration ratio of the carbon nanotube dispersion liquid before and after the centrifugal treatment was 100% and it has been found that carbon nanotubes were highly dispersed. The G/D ratio of the carbon nanotube-containing composition in this dispersion liquid was 54. Using this dispersion liquid, the carbon nanotube-coated film was formed in the same manner as in Example 1 and a resistance change ratio $(R-R_0)/R_0$ was calculated and, as a result, the resistance change ratio was 3%.

(Example 8)

In the same manner as in Example 7, except that the rotating speed of the stirring treatment was changed to 20, 000 rpm, a carbon nanotube dispersion liquid was prepared. The concentration ratio of the carbon nanotube dispersion liquid before and after the centrifugal treatment was 95% and it has been found that carbon nanotubes were highly dispersed. The G/D ratio of the carbon nanotube-containing composition in this dispersion liquid was 62. Using this dispersion liquid, the carbon nanotube-coated film was formed in the same manner as in Example 1 and a resistance change ratio $(R-R_0)/R_0$ was calculated and, as a result, the resistance change ratio was 3%.

(Example 9)

In the same manner as in Example 1, except that the carbon nanotube-containing composition disclosed in Reference Example 2 was used as the carbon nanotube-containing composition, a carbon nanotube dispersion liquid was prepared. The concentration ratio of the carbon nanotube dispersion liquid before and after the centrifugal treatment was 94% and it has been found that carbon nanotubes were highly dispersed. The G/D ratio of the carbon nanotube-containing composition in this dispersion liquid was 23. Using this dispersion liquid, the carbon nanotube-coated film was formed in the same manner as in Example 1 and a resistance change ratio $(R-R_0)/R_0$ was calculated and, as a result, the resistance change ratio was 4%.

(Comparative Example 1)

In the same manner as in Example 1, except that the dispersant was changed to carboxymethyl cellulose (manufactured by Dai-Ichi Kogyo Seiyaku Co., Ltd., product name: Cellogen 5A) and the solvent was changed to water, a carbon nanotube dispersion liquid was prepared. The concentration ratio of the carbon nanotube dispersion liquid before and after the centrifugal treatment was 98%. The G/D ratio of the carbon nanotube-containing composition in this dispersion liquid was 25. Using this dispersion liquid, the carbon nanotube-coated film was formed in the same manner as in Example 1 and a resistance change ratio $(R-R_0)/R_0$ was calculated and, as a result, the resistance change ratio was 35%.

As is apparent from the above results, when carboxymethyl cellulose having hydrophilic functional groups is used as the dispersant, the resulting electrically conductive molded body is inferior in resistance to heat and humidity because of a large resistance change ratio due to moisture absorption.

(Comparative Example 2)

In the same manner as in Example 1, except that the solvent was changed to ethanol, a carbon nanotube dispersion liquid was prepared. It has been found that all the carbon nanotubes were precipitated by the centrifugal treatment and carbon nanotubes were not dispersed at all.

As is apparent from the above results, when the solvent is alcohol, the resulting carbon nanotube dispersion liquid are inferior in dispersibility since the carbon nanotube dispersion liquid is entirely precipitated after centrifugation.

(Comparative Example 3)

In the same manner as in Example 2, except that the concentration of the carbon nanotube-containing composition in the carbon nanotube dispersion liquid was changed to 2% by mass, a carbon nanotube dispersion liquid was prepared. Because of its high viscosity and lack of fluidity, ultrasonic irradiation was not performed uniformly, thus failing to disperse the carbon nanotubes.

As is apparent from the above results, when the concentration of the carbon nanotube-containing composition in the carbon nanotube dispersion liquid is high, the resulting carbon nanotube dispersion liquid is inferior in dispersibility

since the carbon nanotube dispersion liquid is entirely precipitated after centrifugation.

(Comparative Example 4)

In the same manner as in Example 6, except that the rotating speed of the stirring treatment was changed to 2,000 rpm, a carbon nanotube dispersion liquid was prepared. It has been found that the concentration ratio of the carbon nanotube dispersion liquid before and after the centrifugal treatment became 13% and almost all the carbon nanotubes were precipitated.

As is apparent from the above results, when the rotating speed of the stirring treatment is low, the resulting carbon nanotube dispersion liquid is inferior in dispersibility since the carbon nanotube dispersion liquid is entirely precipitated after centrifugation.

The results of Examples and Comparative Examples are summarized in Table 1.

[Table 1]

| | Solvent | Dispersant | Concentration of carbon nanotube-containing composition in carbon nanotube dispersion liquid (% by mass) | Content of dispersant based on 100 parts by mass of carbon nanotube-containing composition (parts by mass ) | Dispersion method | Ultrasonic irradiation dose (kW·min/g) | Rotating speed of stirring treatment (rpm) | Raman G/D ratio of carbon nanotube-containing composition | Concentration ratio before and after centrifugation (%) | Raman G/D ratio of carbon nanotube dispersion liquid | Resistance change ratio of carbon nanotube-coated film (%) |
|---|---|---|---|---|---|---|---|---|---|---|---|
| Example 1 | NMP | Ethyl cellulose | 0.1 | 300 | Ultrasonic | 35 | - | 80 | 96 | 27 | 4 |
| Example 2 | Terpineol | Ethyl cellulose | 0.1 | 300 | Ultrasonic | 35 | - | 80 | 91 | 27 | 4 |
| Example 3 | NMP | Ethyl cellulose | 0.1 | 100 | Ultrasonic | 35 | - | 80 | 86 | 25 | 3 |
| Example 4 | NMP | Ethyl cellulose | 0.1 | 300 | Ultrasonic | 2 | - | 80 | 91 | 46 | 4 |
| Example 5 | NMP | Ethyl cellulose | 0.01 | 150 | Ultrasonic | 300 | - | 110 | 98 | 23 | 3 |
| Example 6 | Terpineol | Ethyl cellulose | 0.1 | 300 | Stirring | - | 22,500 | 80 | 100 | 72 | 4 |
| Example 7 | Terpineol | Ethyl cellulose | 0.1 | 100 | Stirring | - | 22,500 | 80 | 100 | 54 | 3 |
| Example 8 | Terpineol | Ethyl cellulose | 0.1 | 100 | Stirring | - | 20,000 | 80 | 95 | 62 | 3 |
| Example 9 | NMP | Ethyl cellulose | 0.1 | 300 | Ultrasonic | 35 | - | 103 | 94 | 23 | 4 |
| Comparative Example 1 | Water | Carboxymethyl cellulose | 0.1 | 300 | Ultrasonic | 35 | - | 80 | 98 | 25 | 35 |
| Comparative Example 2 | Ethanol | Ethyl cellulose | 0.1 | 300 | Ultrasonic | 35 | - | 80 | 0 | Impossible to measure | Impossible to form |
| Comparative Example 3 | Terpineol | Ethyl cellulose | 2.0 | 300 | Ultrasonic | 35 | - | 80 | 0 | Impossible to measure | Impossible to form |
| Comparative Example 4 | Terpineol | Ethyl cellulose | 0.1 | 300 | Stirring | - | 2,000 | 80 | 13 | Impossible to measure | Impossible to form |

Industrial Applicability

Using the carbon nanotube dispersion liquid of the present invention allows an electrically conductive molded body having a high electrical conductivity and an excellent resistance to heat and humidity to be obtained. The resulting electrically conductive molded body can favorably be used as touch panels, which are required to satisfy smooth surface needs, and display-related transparent electrodes, which are found in liquid crystal displays, organic electroluminescence displays, electronic paper, and the like. The electrically conductive molded body is also preferably used in various devices such as biosensor electrodes, field effect transistors, photovoltaic elements and switching elements.

## Claims

1. A carbon nanotube dispersion liquid comprising a carbon nanotube-containing composition, a cellulose derivative including a constitutional unit represented by the general formula (1), and an organic solvent, wherein the organic solvent contains one or more solvents selected from aprotic polar solvents or terpenes, the concentration of the carbon nanotube-containing composition contained in the carbon nanotube dispersion is 1% by mass or less, and when the dispersion liquid is subjected to a centrifugal treatment at 10,000 G for 10 minutes to recover 90% by volume of the supernatant, the concentration of the carbon nanotube dispersion liquid of the supernatant portion accounts for 80% or more of the concentration of the carbon nanotube dispersion liquid before the centrifugal treatment:

[Chemical Formula 1]

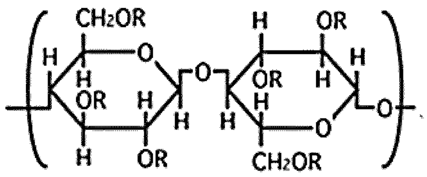

· · · (1)

wherein R may be the same or different and each independently represent H, or a linear or branched alkyl group having 1 to 40 carbon atoms or an acyl group.

2. The carbon nanotube dispersion liquid according to claim 1, wherein the cellulose derivative is cellulose ether or cellulose ester.

3. The carbon nanotube dispersion liquid according to claim 1 or 2, wherein the cellulose derivative is ethyl cellulose.

4. The carbon nanotube dispersion liquid according to any one of claims 1 to 3, wherein the cellulose derivative has a weight-average molecular weight of 10, 000 or more and 150,000 or less.

5. The carbon nanotube dispersion liquid according to any one of claims 1 to 4, wherein the content of the cellulose derivative is 10 parts by mass or more and 500 parts by mass or less based on 100 parts by mass of the carbon nanotube-containing composition.

6. The carbon nanotube dispersion liquid according to any one of claims 1 to 5, wherein the content of the cellulose derivative is 50 parts by mass or more and 300 parts by mass or less based on 100 parts by mass of the carbon nanotube-containing composition.

7. The carbon nanotube dispersion liquid according to any one of claims 1 to 6, wherein a ratio of single-walled or

double-walled carbon nanotubes to all the carbon nanotubes in the carbon nanotube-containing composition is 50% or more.

**8.** The carbon nanotube dispersion liquid according to any one of claims 1 to 7, wherein a ratio of the height of the G band to the height of the D band (G/D ratio) at a wavelength of 532 nm by Raman spectroscopic analysis of the carbon nanotubes in the carbon nanotube dispersion liquid is 20 or more.

**9.** The carbon nanotube dispersion liquid according to any one of claims 1 to 8, wherein the organic solvent contains N-methylpyrrolidone.

**10.** The carbon nanotube dispersion liquid according to any one of claims 1 to 8, wherein the organic solvent contains terpineol.

**11.** An electrically conductive molded body obtained by forming a film of the carbon nanotube dispersion liquid according to any one of claims 1 to 10 on a base and removing an organic solvent.

**12.** A method for manufacturing the carbon nanotube dispersion liquid according to any one of claims 1 to 10, the method comprising subjecting a mixture containing a carbon nanotube-containing composition, a cellulose derivative including a constitutional unit represented by the general formula (1), and one or more organic solvents selected from aprotic polar solvents or terpenes to a stirring treatment and/or an ultrasonic treatment:

[Chemical Formula 2]

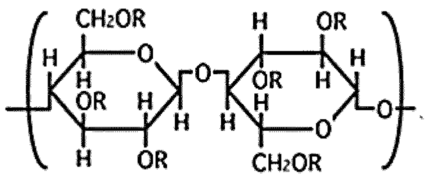

· · · (1)

wherein R may be the same or different and each independently represent H, or a linear or branched alkyl group having 1 to 40 carbon atoms or an acyl group.

**13.** The manufacturing method according claim 12, wherein a rotating speed of the stirring treatment is 3, 000 to 50, 000 rpm.

**14.** The manufacturing method according claim 12, wherein the irradiation dose of the ultrasonic treatment is 1 to 500 kW/min/g.

**INTERNATIONAL SEARCH REPORT**

International application No. PCT/JP2017/016160

A. CLASSIFICATION OF SUBJECT MATTER
*C01B32/158*(2017.01)i, *C08K3/04*(2006.01)i, *C08K5/3415*(2006.01)i, *C08L1/00*(2006.01)i, *C09D5/24*(2006.01)i, *C09D7/12*(2006.01)i, *H01B1/24*(2006.01)i, *H01B5/14*(2006.01)i

According to International Patent Classification (IPC) or to both national classification and IPC

B. FIELDS SEARCHED

Minimum documentation searched (classification system followed by classification symbols)
C01B32/158, C08K3/04, C08K5/3415, C08L1/00, C09D5/24, C09D7/12, H01B1/24, H01B5/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2014/128190 A1 (BAYER MATERIALSCIENCE AG), 28 August 2014 (28.08.2014), claims; page 5, lines 12 to 16; page 7, lines 1 to 3; examples<br>& JP 2016-514080 A & US 2016/0020466 A1<br>& EP 2959524 A1 | 1-9,11-14<br>10 |
| X<br>Y | JP 2010-132863 A (Toray Industries, Inc.), 17 June 2010 (17.06.2010), claims; paragraphs [0036], [0038]; example 6<br>(Family: none) | 1-9,11-14<br>10 |
| X<br>Y | JP 2006-269311 A (Toray Industries, Inc.), 05 October 2006 (05.10.2006), claims; paragraphs [0056], [0063]; examples<br>(Family: none) | 1-9,11-14<br>10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>15 May 2017 (15.05.17) | Date of mailing of the international search report<br>25 July 2017 (25.07.17) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

INTERNATIONAL SEARCH REPORT

International application No.
PCT/JP2017/016160

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-276232 A (Mitsubishi Electric Corp.), 07 October 2004 (07.10.2004), claims; paragraph [0013]; examples (Family: none) | 10 |
| Y | JP 2007-056136 A (Mitsubishi Electric Corp.), 08 March 2007 (08.03.2007), claims; paragraph [0016]; examples (Family: none) | 10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006269311 A
- JP 2010254546 A
- WO 2009098779 A
- JP 2011148674 A
- JP 2016564654 A